# EUROPEAN PATENT APPLICATION

(11) **EP 1 876 514 A1**
(43) Date of publication of application: **09.01.2008**
(21) Application number: 07102413.7
(22) Date of filing: 14.02.2007
(51) Int. Cl.: G06F 3/033

(54) **Portable communication device with 2D displacement sensor**

(30) Priority: 06.07.2006 CN 200610103033
(71) Applicant: Inventec Corporation, Shih-Lin District Taipei (TW)
(72) Inventor: Hsueh, Po-Wen, 111, Taipei (TW)
(74) Representative: Patentanwälte Kewitz & Kollegen

(57) **Abstract**

A portable communication device includes a case body, a microprocessor, a key set, and a photo module. In this case, the microprocessor is disposed in the case body. The key set is disposed on one surface of the case body, and the photo module is disposed on another surface of the case body. The photo module at least includes a light source and a light sensing element. When the portable communication device moves on a plane, the light sensing element generates a light sensing signal according to the light emitted from the light source. Then, the microprocessor calculates and outputs a displacement signal according to the light sensing signal.

## Description

### BACKGROUND OF THE INVENTION

### Field of Invention

The invention relates to a portable communication device and, in particular, to a portable communication device with a mouse function.

### Related Art

With advances in technology, many electronic products have been miniaturized to become portable. Examples include laptop computers, personal digital assistants (PDA), portable communication devices, etc. In particular, portable communication devices have become indispensable equipments in recent years.

Generally speaking, a portable communication device primarily provides a mobile communication function. It is used with an antenna module, a radio-frequency (RF) module, a base-frequency module, as well as display and key modules. Additionally, modem portable communication devices often provide several additional functions, such as camera, calendar, and media player.

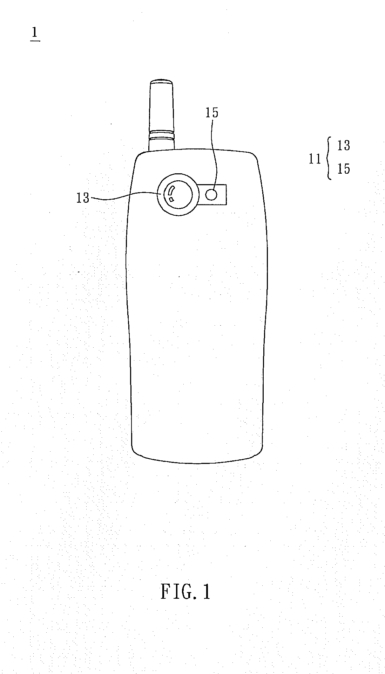

As shown in FIG. 1, to use the camera function of a portable communication device 1, it has to have a photo module 11 that includes at least a lens set 13 and a flash element 15. The flash element 15 is used to provide light in an insufficiently bright environment. The lens set 13 is used to capture images.

For other portable electronic devices, such as laptop computers, the user usually has to use a mouse in order to easily operate the computer. It is inconvenient for the user to carry an additional mouse for this purpose.

As described above, portable communication devices are indispensable, and a mouse is an important electronic device that the user does not want to carry all the time. Therefore, the invention provides a portable communication device with the function of mouse.

### SUMMARY OF THE INVENTION

In view of the foregoing, the invention is to provide a portable communication device with the functions of mouse.

To achieve the above, the invention discloses a portable communication device, which includes a case body, a microprocessor, a key set, and a photo module. The microprocessor is disposed in the case body. The key set is disposed on one surface of the case body. The photo module is disposed on another surface of the case body and includes at least a light source and a light sensing element. When the portable communication device moves on a plane, the light sensing element generates a light sensing signal according to the light emitted by the light source, and then the microprocessor computes and outputs a displacement signal according to the light sensing signal.

As mentioned above, the portable communication device of the invention uses the existing light source and light sensing element of its photo module to create an optical mouse. The light sensing element generates a light sensing signal according to the light emitted by the light source. The microprocessor computes and outputs a displacement signal according to the light sensing signal. The portable communication device is thus equipped with the mouse function. The user therefore does not need to carry an additional mouse. He or she can enjoy both the mouse and the wireless communication functions by simply carrying the portable communication device of the invention.

### BRIEF DESCRIPTION OF THE DRAWINGS

The invention will become more fully understood from the detailed description given herein below illustration only, and thus is not limitative of the present invention, and wherein:

FIG. 1 is a schematic view showing a conventional portable communication device;

FIGS. 2A and 2B are schematic views showing three-dimensional views of a portable communication device according to a preferred embodiment of the invention;

FIG. 3 is a schematic view showing the portable communication device of the invention being used as a mouse; and

FIG. 4 is another schematic view showing a portable communication device of the invention being used as a mouse.

### DETAILED DESCRIPTION OF THE INVENTION

The present invention will be apparent from the following detailed description, which proceeds with reference to the accompanying drawings, wherein the same references relate to the same elements.

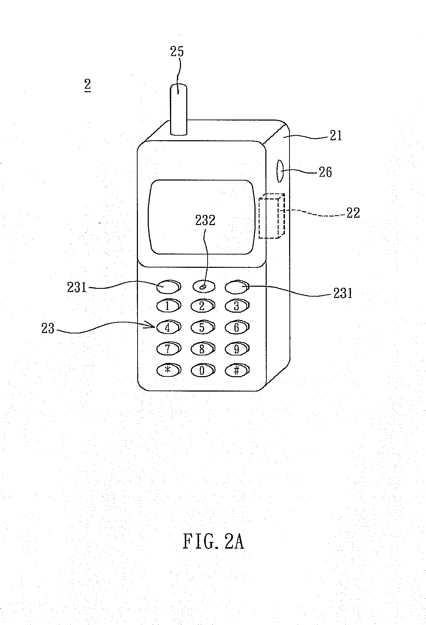

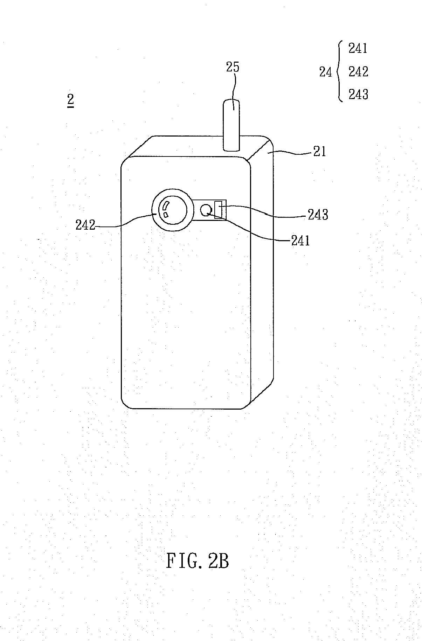

As shown in FIGS. 2A and 2B, the portable communication device 2 according to a preferred embodiment of the invention includes a case body 21, a microprocessor 22, a key set 23, a photo module 24, an antenna module 25, and a wireless transmission module 26. In this embodiment, the portable communication device 2 is a bar-type portable communication device. Of course, it can be a folder-type, slide-type, or swing-type portable communication device.

As shown in FIG. 2A, the microprocessor 22 is disposed in the case body 21. The key set 23 is disposed on one surface of the case body 21, while the photo module 24 is disposed on another surface of the case body 21. In this embodiment, the microprocessor 22 is used to process digital signals. For example, the microprocessor 22 can process communication signals for the user to communicate with others. Besides, the microprocessor 22 can also process other electrical signals for other functions, such as the notepad, calculator, games, and photo functions. When the portable communication device 2 is used as a mouse according to the invention, the microprocessor 22 can compute and output a displacement signal according to an input signal.

The key set 23 can be any commonly seen key set, such as the number key set, or the QWERTY key set. In this embodiment, the key set 23 includes at least two functional soft keys 231, such as the "menu" and "address book" keys of the portable communication device 2. When it is used as a mouse, the two functional soft keys 231 represent the left and right keys of the mouse. Moreover, as shown in FIG. 2A, the key set 23 further includes a direction key 232 that can function as the mouse roller. It should be noted that the key set 23 may include other keys as well. They can be disposed on another surface (not shown) of the case body 21. Furthermore, the key set 23 can be physical keys and touch-control keys. It may also include a roller key (not shown) disposed on any surface of the case body 21 to function as the mouse roller.

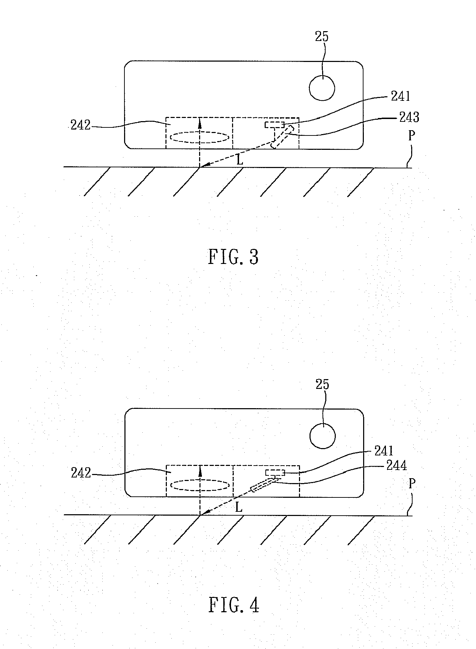

As shown in FIG. 2B, the photo module 24 includes a light source 241, a light sensing element 242, and a reflecting element 243. In this embodiment, the light source 241 is a flash element of the photo module 24. The light sensing element 242 is a lens set of the photo module 24. Therefore, when the portable communication device 2 functions as a camera, the light source 241 provides additional light in an insufficiently bright environment. The light sensing element 242 captures the image when a picture is taken. When the portable communication device 2 works as a mouse, the light source 241 emits light and the light sensing element 242 receives the light to generate a light sensing signal. As illustrated in FIG. 3, when the portable communication device 2 moves along a plane P, the light source 241 emits a beam of light L. The reflecting element 243 reflects the beam L, and guides the beam L to the side of the light sensing element 242. Afterwards, the plane P reflects the light L to the light sensing element 242. Finally, the light sensing element 242 generates a light sensing signal according to the light L. The microprocessor 22 then computes and outputs a displacement signal according to the light sensing signal.

It should be noted that the disclosed portable communication device 2 can use a light-guiding element 244 to replace the reflecting element 243. As shown in FIG. 4, the light-guiding element 244 can also guide the beam L emitted by the light source 241 to the plane P adjacent to the light sensing element 242.

With further reference to FIG. 2A, the antenna module 25 of the portable communication device 2 is used to receive/transmit a wireless communication signal. In this embodiment, the microprocessor 22 can process the wireless communication signals received/transmitted by the antenna module 25.

Additionally, the wireless transmission module 26 of the portable communication device 2 is disposed on a surface of the case body 21. It transmits the displacement signal computed and output by the microprocessor 22 to an electronic device. In this embodiment, the wireless transmission module 26 can be an infrared transmission module, a Bluetooth transmission module, or any suitable wireless transmission module. The displacement signal is transmitted to a desktop or laptop computer.

In summary, the portable communication device of the invention uses the existing light source and light sensing element of its photo module to create an optical mouse. The light sensing element generates a light sensing signal according to the light emitted by the light source. The microprocessor computes and outputs a displacement signal according to the light sensing signal. The portable communication device is thus equipped with the mouse function. The user therefore does not need to carry an additional mouse. He or she can enjoy both the mouse and the wireless communication functions by simply carrying the portable communication device of the invention.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A portable communication device, comprising:
a case body (21);
a microprocessor (22) disposed in the case body;
a key set (23) disposed on one surface of the case body; and
a photo module (24) disposed on another surface of the case body and comprises at least a light source (241) and a light sensing element (242),
wherein when the portable communication device (22) moves on a plane (P), the light sensing element generates a light sensing signal according to the light (L) emitted by the light source, and the microprocessor computes and outputs a displacement signal according to the light sensing signal.

2. The portable communication device of claim 1, further comprising a wireless transmission module (26) for transmitting the displacement signal to an electronic device.

3. The portable communication device of claim 2, wherein the wireless transmission module is an infrared transmission module or a bluetooth transmission module.

4. The portable communication device of any of the preceding claims, wherein the electronic device is a desktop computer or a laptop computer.

5. The portable communication device of any of the preceding claims, wherein the light source is a flash element of the photo module (24).

6. The portable communication device of any of the preceding claims, wherein the light sensing element is a lens set of the photo module (24).

7. The portable communication device of any of the preceding claims, wherein the photo module (24) further comprises a reflecting element (243) for reflecting the light emitted by the light source obliquely toward an area of the plane (P) adjacent to the light sensing element (242).

8. The portable communication device of claim 7, wherein the plane (P) reflects the light emitted from the light source to the light sensing element.

9. The portable communication device of any of claims 1 to 6, wherein the photo module (24) further comprises a light guiding element (244) for guiding the light emitted by the light source obliquely toward an area of the plane (P) adjacent to the light sensing element.

10. The portable communication device of claim 9, wherein the plane (P) reflects the light emitted from the light source to the light sensing element.

11. The portable communication device of any of the preceding claims, further comprising an antenna module (25) for receiving/transmitting a communication signal, wherein the microprocessor processes the communication signal.

12. The portable communication device of any of the preceding claims, wherein the key set (23) comprises at least two functional soft keys (231) as the left and right keys of a mouse.

13. The portable communication device of any of the preceding claims, wherein the key set (23) comprises at least a direction key (232) to simulate a mouse roller.

14. The portable communication device of any of the preceding claims, wherein the key set (23) comprises at least a roller key as a mouse roller.

15. The portable communication device of any of the preceding claims, wherein the portable communication device (2) is a folder-type portable communication device, a slide-type portable communication device, a swing-type portable communication device, or a bar-type portable communication device.
